# EUROPEAN PATENT SPECIFICATION

(11) **EP 1 516 323 B1**
(45) Date of publication and mention of the grant of the patent: **03.01.2007**
(21) Application number: 03730434.2
(22) Date of filing: 11.06.2003
(51) Int. Cl.: G11B 7/24

(54) **DUAL STACK OPTICAL DATA STORAGE MEDIUM AND USE OF SUCH MEDIUM**
ZWEISCHICHTIGER OPTISCHER DATENTRÄGER UND GEBRAUCH DESSELBEN
SUPPORT DE STOCKAGE DE DONNEES OPTIQUE A DEUX PILES ET UTILISATION DE CELUI-CI

(30) Priority: 14.06.2002 EP 02077441
(43) Date of publication of application: 23.03.2005
(73) Proprietor: Koninklijke Philips Electronics N.V., 5621 BA Eindhoven (NL)
(72) Inventor: HELLMIG, Joachim, W., NL-5656 AA Eindhoven (NL); MIJIRITSKII, Andrei, NL-5656 AA Eindhoven (NL); TUKKER, Teunis, W., NL-5656 AA Eindhoven (NL); STALLINGA, Sjoerd, NL-5656 AA Eindhoven (NL)
(74) Representative: van Liempd, Jan
(86) International application number: PCT/IB2003/002570
(87) International publication number: WO 2003/107338

(56) References cited:
- EP-A- 1 152 406
- EP-A- 1 172 811
- US-B1- 6 246 656

## Description

The invention relates to a dual-stack optical data storage medium for at least read out using a focused radiation beam with a wavelength λ between 400 nm and 410 nm and an Numerical Aperture (NA) between 0.84 and 0.86, entering through an entrance face of the medium during read out, comprising:
- a substrate with present on a side thereof:

- a first stack of layers L0, comprising a first information layer,
- a second stack of layers L1, comprising a second information layer, L1 being present at a position closest to the entrance face and L0 more remote from the entrance face than L1,
- a radiation beam transparent spacer layer between L0 and L1,
- a radiation beam transparent cover layer between the entrance face and L1
- a transmission stack TS0 with a thickness d_{TS0} and an effective refractive index n_{TS0} containing all layers between L0 and the entrance face,
- a transmission stack TS1 with a thickness d_{TS1} and an effective refractive index n_{TS1} containing all layers between L1 and the entrance face.

The invention also relates to the use of such medium.

An embodiment of such an optical recording medium is known from a paper "New Replication Process Using Function-assigned Resins for Dual-layered Disc with 0.1 mm thick Cover layer", by K. Hayashi, K. Hisada and E. Ohno, Technical Digest ISOM 2001, Taipei, Taiwan. A minimum spacer layer thickness of 30 µm was disclosed.

There is a constant drive for obtaining optical storage media suitable for recording and reproducing, which have a storage capacity of 8 Gigabyte (GB) or larger. This requirement is met by some Digital Video Disk or sometimes also Digital Versatile Disk formats (DVD). DVD formats can be divided into DVD-ROM that is exclusively for reproduction, DVD-RAM, DVD-RW and DVD+RW, which are also usable for rewritable data storage, and DVD-R, which is recordable once. Presently the DVD formats comprise disks with capacities of 4.7 GB, 8.5 GB, 9.4 GB and 17 GB.

The 8.5 GB and, in particular, the 9.4 GB (DVD-9) and 17 GB (DVD-18) formats exhibit more complicated constructions and usually comprise multiple information storage layers. The 4.7 GB single layer re-writable DVD format is easy to handle comparable, for example, to a conventional compact disk (CD) but offers an insufficient storage capacity for video recording purposes.

A high storage capacity format that recently has been suggested is Digital Video Recording (DVR). Two formats are currently being developed: DVR-red and DVR-blue, the latter also called Blu-ray Disc (BD), where red and blue refer to the used radiation beam wavelength for recording and reading. This disk overcomes the capacity problem and, in its simplest form, has a single storage layer format which is suitable for high density digital video recording and storage having a capacity above 22 GB in the DVR-blue format.

The DVR disk generally comprises a disk-shaped substrate exhibiting on one or both surfaces an information storage layer. The DVR disk further comprises one or more radiation beam transmissive layers. These layers are transmissive to the radiation beam that is used to read from or write into the disk. For example a transmissive cover layer, which is applied on the information storage layer. Generally, for high-density disks, lenses with high numerical aperture (NA), e.g. higher than 0.60, are used for focusing such a radiation beam with a relatively low wavelength. For systems with NA's above 0.60 it becomes increasingly difficult to apply substrate incident recording with substrate thicknesses in the 0.6-1.2 mm range due to decreasing tolerances on e.g. thickness variations and disk tilt. For this reason, when using disks that are recorded and read out with a high NA, focusing onto a recording layer of a first recording stack, is performed from the side opposite from the substrate. Because the first recording layer has to be protected from the environment at least one relatively thin radiation beam transmissive cover layer, e.g. thinner than 0.5 mm, is used through which the radiation beam is focused. Clearly the need for the substrate to be radiation beam transmissive no longer exists and other substrate materials, e.g. metals or alloys thereof, may be used.

A dual-stack optical storage medium has two reflective information layers, that are read-out from the same side of the medium. In this dual stack medium case, where a second recording stack is present, a radiation beam transmissive spacer layer is required between the recording stacks. The first recording stack must be at least partially transparent to the radiation beam wavelength in order to make reading from the recording layer of the second recording stack possible. The thickness of such spacer layers typically is thicker than 30 µm. The radiation beam transmissive layer or layers which are present between the radiation beam source and the recording stack that is most remote from the substrate are normally called cover layers. When prefabricated sheets are used as transmissive layers extra transmissive adhesive layers are required in order to bond cover layers to each other.

In the DVR disk the variation or unevenness of the thickness of the radiation beam transmissive layers over the radial extension of the disk has to be controlled very carefully in order to minimize the variation in the optical path length for the impinging radiation. Especially the optical quality of the radiation beam at the focal point in the BD or DVR-blue version, which uses a radiation beam with a wavelength substantially equal to 405 nm and an NA substantially equal to 0.85, is relatively sensitive to variations in the thickness of the transmissive layers. The total layer thickness has an optimal value in order to obtain minimum optical spherical aberration of the focused radiation beam on, e.g., the first information recording layer. A deviation, e.g. +/- 5 µm, from this optimal thickness already introduces a considerable amount of this kind of aberration. Because of this small range it is important that the average thickness of the transmissive layers is equal to or close to its optimal thickness in order to make optimal use of the tolerances of the system and to have a high yield in manufacturing the medium. Assuming that a thickness error is Gaussian distributed around the nominal setting of the thickness, it is clear that the number of manufactured disks which do not comply with the above specification is minimal when the target setting of the nominal thickness during manufacture is substantially equal to the optimal thickness of the cover layer as in the specification of the DVR disk. Two studies of the spacer-layer thickness were published recently for DVD dual-layer discs. A numerical aperture of 0.6, readout through the substrate of 0.58 mm and light of 405 nm wavelength were used. An optimum spacer layer thickness of 30 um has been found by Lee et al. Jpn. J. Appl. Phys. Vol 40 (2001) pp 1643-1644 and 40 µm was found by Higuchi and Koyanagi, Jpn. J. Appl. Phys. Vol. 39 (2000) 933 [4].
For a system with 0.1 mm thin cover layer and a high NA of 0.85 and a wavelength of 405 nm additional correction of the spherical aberration (proportional to λ/NA⁴) is required. To neglect the interference from the neighboring layer a spacer layer of minimally 30 µm has been considered necessary. This has the disadvantage that the drive design for reading out such a medium in such case has to be rather complicated in order to cover the necessary range for spherical aberration correction. Further the cover layer of such medium may become relatively thin and the underlying layers are more susceptible to damage.

EP-A-1172811 discloses an information recording medium having a first information layer and a second information layer. The thickness of a first substrate between the first information layer and a laser beam is in a range of 10 µm to 700 µm.

EP-A-1152406 discloses an optical recording medium having a single information layer and a light transmission layer which has a thickness deviation smaller than +/- 2.3 µm.

It is an object of the invention to provide a medium of the kind as described in the opening paragraph with a reliable read out of data from the first information layer and form the second information layer.

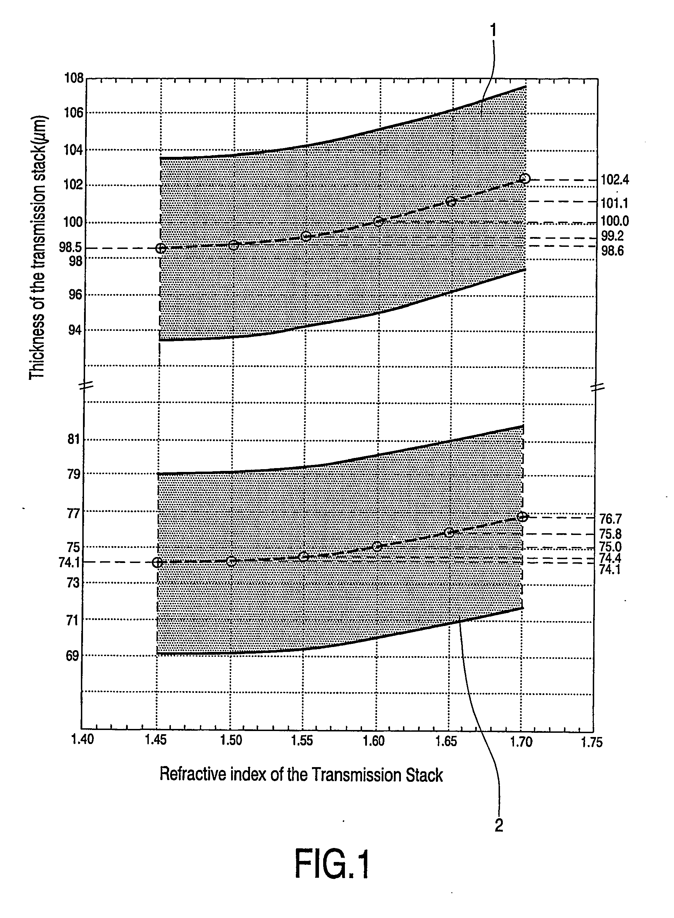

This object is achieved in accordance with the invention by an optical data storage medium which is characterized in that the spacer layer has a thickness selected from the range 20 - 30 µm, the thickness d_{TS0} in dependence on the refractive index n_{TS0} is within the upper shaded area in Fig.1 and the thickness d_{TS1} in dependence on the refractive index n_{TS1} is within the lower shaded area in Fig.1. The specifications of the Transmission Stacks (TS) include all possible layers on top of the concerning recording stack, such as e.g. gluing layers in case of foils, the spacer layer and the semi-transparent recording stack of L1 in case of TS0, the Cover Layer and possibly a Protective coating). From EP-A-104705 5 it is known to use a polymer layer such as, for example, a polycarbonate (PC) sheet as light-transmissive cover or spacer layer and adhere such layer to the information storage layer by means of a thin, spin-coated layer of a UV curable liquid resin or a pressure sensitive adhesive (PSA).

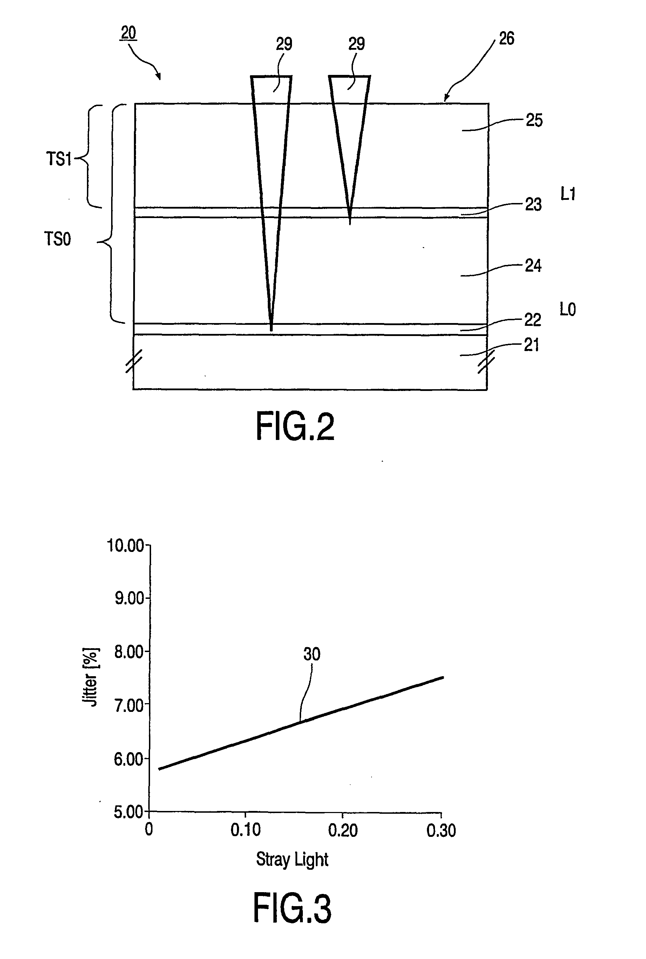

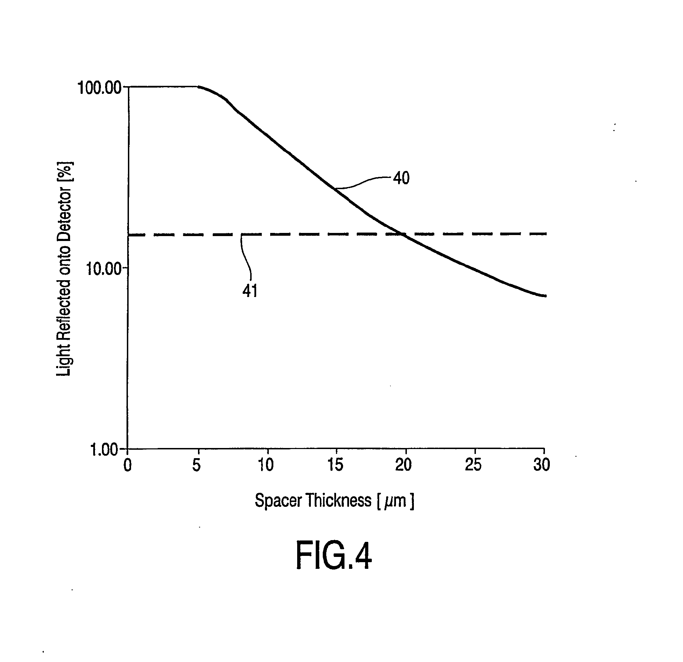

To find the minimal spacer-layer thickness for the blue system with high NA the dependence of the data quality was studied when read out from the medium as function of the spacer-layer thickness. It was found that in general, the spacer layer thickness or the amount of separation of the first information and the second information layer depends on the size of the photo-detector in the optical pick-up unit (OPU) of the optical medium drive, the magnification from the photo-detector to the medium, the reflectivity ratio of the first and second information layers and the distance between the two layers, i.e. the thickness of the spacer layer. A stable OPU design restricts the size of the photo detector and the magnification of objective lens and collimator lens. Tolerance for aging and alignment errors require a minimum detector size of 100 µm and a magnification of about 10. First the influence of the stray-light on the recording performance has been modeled. The main influence comes from reduction of the signal modulation resulting in a decrease of the signal to noise ratio (Fig. 3). In a second step, the amount of stray-light as function of the spacer-layer thickness is simulated using ray tracing (Fig. 4).

In an embodiment the maximum deviations of d_{TS0} and d_{TS1} from respectively the average values of d_{TS0} and d_{TS1} between a radius of 23 mm and 24 mm of the medium do not exceed ± 2 µm measured over the whole area of the medium. This has the advantage that no substantial correction for spherical aberration is required when the first information layer of the medium or the second information layer of the medium is scanned by the optical medium drive. During scanning the OPU will move radially inward our radially outward while the medium rotates. When the thickness variations of TS0 and TS1 are within said limits also the spherical aberration stays within acceptable limits over the whole area of the medium. The only instance when correction is required is when the OPU switches from focusing onto the first information layer to focusing onto the second information layer or vice versa.

In another embodiment n_{TS0} and n_{TS1} both have a value of 1.6 and the following conditions are fullfilled: 95 µm ≤ d_{TS0} ≤ 105 µm and 70 µm ≤ d_{TS1} ≤ 80 µm. Most plastic materials used as transparent layers have a refractive index of 1.6 or substantially close hereto. In this case reliable read out is possible when the thicknesses fall within the mentioned ranges.

In a further embodiment the spacer layer thickness is 25 µm or substantially close to 25 µm and the cover layer thickness is 75 µm or substantially close to 75 µm. It is advantageous from a viewpoint of manufacture to use a substantial fixed value of the spacer and cover layer thickness. For instance, one method of manufacture comprises the application of a pressure sensitive adhesive (PSA) with a predetermined thickness which is UV-cured after being brought in contact with other layers of the medium. This material is usually supplied as a sheet of foil with the PSA on one or sides and those sheets are made with a predetermined thickness.

The invention will be elucidated in greater detail with reference to the accompanying drawings in which
Fig. 1 shows the allowable area of thickness of the transmission stacks TS0 and TS1 as a function of the refractive index.
Fig. 2 schematically shows the layout of a dual-stack recording medium according to the invention.
Fig. 3 shows a simulation of data-to-clock jitter when read out as function of the stray-light from the adjacent, out-of-focus, information layer.
Fig. 4 shows a ray-tracing simulation of the light reflected onto the photo-detector as function of the spacer-layer thickness.

In Fig.1 the allowed thickness ranges of TS0 and TS1 are indicated The thickness d_{TS0} in dependence on the refractive index n_{TS0} is within the upper shaded area 1 and the thickness d_{TS1} in dependence on the refractive index n_{TS1} is within the lower shaded area 2. The spacer layer 24 (Fig. 2) has a thickness selected from the range 20 - 30 µm.

In Fig.2 an embodiment of the dual-stack optical data storage medium 20 according to the invention is shown. A focused laser beam 29 with a wavelength λ of 405 nm and an Numerical Aperture (NA) of 0.85 enters through entrance face 26 of the medium 20 during read out. A substrate 21 made of polycarbonate has present on a side thereof: a first stack of layers 22 named L0 comprising a first information layer, a second stack of layers 23 named L1, comprising a second information layer. L1 is present at a position closest to the entrance face 26 and L0 is present more remote from the entrance face 26 than L1. A transparent spacer layer 24 made of a UV cured resin, e.g. SD 694 made by DIC, is present between L0 and L1. A transparent cover layer 25 is present between the entrance face 26 and L1 and may be made of the same material or a sheet of PC or PMMA with a pressure sensitive adhesive (PSA). The spacer layer may also be a sheet combined with PSA. The transmission stack named TS0 has a thickness d_{TS0} of 100 µm and an effective refractive index n_{TS0} = 1.6 and contains all layers between L0 and the entrance face 26. The L1 stack 23 has a relatively low thickness of a maimally a few hundred nm the influence of which may be neglected. Naturally L1 does affect the optical transmission but this aspect is not dealt with here. The transmission stack named TS1 has a thickness d_{TS1} of 75 µm and an effective refractive index n_{TS1} of 1.6 and contains all layers between L1 and the entrance face (26). The spacer layer (24) has a thickness of 25 µm. The thickness d_{TS0} =100 µm at a refractive index n_{TS0} =1.6 falls within the upper shaded area in Fig.1 and the thickness d_{TS1} = 75 µm at a refractive index n_{TS0} = 1.6 falls within the lower shaded area in Fig. 1.

In Fig. 3 the modeled data-to-clock jitter in %, when reading the first information layer of L0, as function of the stray-light from the out of focus layer, e.g. the second information layer of L1, is represented by graph 30. The jitter without stray-light was chosen to be 5.8%. At a stray-light level of 15% the jitter has increased from 5.8% to 6.5% which is tolerable.

In Fig. 4 the ray-tracing simulation of the light reflected onto the photo-detector as function of the spacer-layer thickness is represented by graph 40. A 15% upper limit on the stray-light is represented by dotted line 41. The stray-light as function of the spacer- layer thickness was calculated for a OPU detector size of 100 µm and a magnification factor of 10. The minimum spacer layer 24 (Fig. 2) thickness to guarantee less than 15% stray-light is 20 µm.

According to the invention a dual-stack optical data storage medium is described for read out using a focused radiation beam with a wavelength of 400 - 410 nm and a Numerical Aperture (NA) of 0.84 - 0.86. The medium has a substrate and a first stack of layers named L0 comprising a first information layer and a second stack of layers named L1, comprising a second information layer. A radiation beam transparent spacer layer is present between L0 and L1. A transmission stack named TS0 with a thickness d_{TS0} and an effective refractive index n_{TS0} contains all layers between L0 and an entrance face of the medium. A transmission stack named TS1 with a thickness d_{TS1} and an effective refractive index n_{TS1} containing all layers between L1 and the entrance face. The spacer layer has a thickness selected from the range 20 - 30 µm, the thickness d_{TS0} in dependence on the refractive index n_{TS0} and the thickness d_{TS1} in dependence on the refractive index n_{TS0} are within a specified area. In this way a reliable read out of both the first and the second information layer of respectively L0 and L1 is achieved.

## Claims

1. A dual-stack optical data storage medium (20) for at least read out using a focused radiation beam (29) with a wavelength λ between 400 nm and 410 nm and an Numerical Aperture (NA) between 0.84 and 0.86, entering through an entrance face (26) of the medium (20) during read out, comprising:
- a substrate (21) with present on a side thereof:
- a first stack of layers (L0, 22) comprising a first information layer,
- a second stack of layers (L1, 23), comprising a second information layer, said second stack of layers (L1, 23) being present at a position closest to the entrance face (26) and said first stuck of layers (L0, 22) more remote from the entrance face (26) than said second stack of layers (L1, 23),
- a radiation beam (29) transparent spacer layer (24) between said first stuck of layers (L0, 22) and said second stack of layers (L1, 23),
- a radiation beam (29) transparent cover layer (25) between the entrance face (26) and said second stack of layers (L1, 23),
- a transmission stack (TS0) with a thickness d_{TS0} and an effective refractive index n_{TS0} containing all layers between said first stuck of layers (L0, 22) and the entrance face (26),
- a transmission stack (TS1) with a thickness d_{TS1} and an effective refractive index n_{TS1} containing all layers between said second stack of layers (L1, 23) and the entrance face (26),
**characterized in that**
the spacer layer (24) has a thickness selected from the range 20 - 30 µm, the thickness d_{TS0} in dependence on the refractive index n_{TS0} is within the upper shaded area in Fig.1 and the thickness d_{TS1} in dependence on the refractive index n_{TS0} is within the lower shaded area in Fig.1.

2. An optical data storage medium (20) according to claim 1, wherein the maximum deviations of d_{TS0} and d_{TS1} from respectively the average values of d_{TS0} and d_{TS1} between a radius of 23mm and 24 mm of the medium (20) do not exceed ± 2 µm measured over the whole area of the medium (20).

3. An optical data storage medium (20) according to claim 1 or 2, wherein n_{TS0} and n_{TS1} both have a value of 1.6 and the following conditions are fullfilled: 95 µm ≤ d_{TS0} ≤ 105 µm and 70 µm ≤ d_{TS1} ≤ 80 µm.

4. An optical data storage medium (20) according to any one of claims 1 - 3, wherein the spacer layer (24) thickness is 25 µm or substantially close to 25 µm and the cover layer (25) thickness is 75 µm or substantially close to 75 µm.

5. Use of an optical data storage medium as claimed in any one of the preceding claims.

## Patentansprüche

1. Optisches Datenspeichermedium mit zwei Schichtenfolgen (Dual-Stack-Datenspeichermedium) (20) zumindest zum Auslesen, bei dem ein fokussiertes Strahlenbündel (29) mit einer Wellenlänge λ zwischen 400 nm und 410 nm sowie eine numerische Apertur (NA) zwischen 0,84 und 0,86 verwendet werden, wobei das Strahlenbündel während des Auslesens durch eine Eintrittsfläche (26) des Mediums (20) eintritt und das Medium Folgendes umfasst:
- ein Substrat (21) , auf dessen einer Seite Folgendes vorhanden ist:
- eine erste Schichtenfolge (L0, 22), die eine erste Informationsschicht umfasst,
- eine zweite Schichtenfolge (L1, 23), die eine zweite Informationsschicht umfasst, wobei sich die zweite Schichtenfolge (L1, 23) in einer der Eintrittsfläche (26) am nächsten gelegenen Position befindet und die erste Schichtenfolge (L0, 22) von der Eintrittsfläche (26) weiter entfernt ist als die zweite Schichtenfolge (L1, 23),
- eine für das Strahlenbündel (29) transparente Abstandsschicht (24) zwischen der ersten Schichtenfolge (L0, 22) und der zweiten Schichtenfolge (L1, 23),
- eine für das Strahlenbündel (29) transparente Deckschicht (25) zwischen der Eintrittsfläche (26) und der zweiten Schichtenfolge (L1, 23),
- eine Übertragungsschichtenfolge TS0 mit einer Dicke D_{TS0} und einem effektiven Brechungsindex n_{TS0}, die alle Schichten zwischen der ersten Schichtenfolge (L0, 22) und der Eintrittsfläche (26) enthält,
- eine Übertragungsschichtenfolge TS1 mit einer Dicke d_{TS1} und einem effektiven Brechungsindex n_{TS1}, die alle Schichten zwischen der zweiten Schichtenfolge (L1, 23) und der Eintrittsfläche (26) enthält,
**dadurch gekennzeichnet, dass**
die Abstandsschicht (24) eine Dicke hat, die aus dem Bereich 20 - 30 µm ausgewählt ist, die Dicke d_{TS0} in Abhängigkeit vom Brechungsindex n_{TS0} innerhalb des oberen schraffierten Bereiches in Figur 1 liegt und die Dicke d_{TS1} in Abhängigkeit vom Brechungsindex n_{TS1} innerhalb des unteren schraffierten Bereiches in Figur 1 liegt.

2. Optisches Datenspeichermedium (20) nach Anspruch 1, bei dem die Abweichungen von d_{TS0} und D_{TS1} von den Durchschnittswerten von d_{TS0} bzw. D_{TS1} zwischen einem Radius von 23 mm und 24 mm des Mediums (20) maximal ±2 µm betragen, gemessen über die gesamte Fläche des Mediums (20).

3. Optisches Datenspeichermedium (20) nach Anspruch 1 oder 2, bei dem n_{TS0} und n_{TS1} jeweils einen Wert von 1,6 haben und die folgenden Bedingungen erfüllt sind: 95 µm ≤ d_{TS0} ≤ 105 µm und 70 µm ≤ d_{TS1} ≤ 80 µm.

4. Optisches Datenspeichermedium (20) nach einem der Ansprüche 1 bis 3, bei dem die Dicke der Abstandsschicht (24) 25 µm beträgt oder im Wesentlichen nahe 25 µm liegt und die Dicke der Deckschicht (25) 75 µm beträgt oder nahe 75 µm liegt.

5. Verwendung eines optischen Datenspeichermediums nach einem der vorhergehenden Ansprüche.

## Revendications

1. Support de stockage de données optiques à deux piles (20) pour au moins lire l'utilisation d'un faisceau focalisé de rayonnement (29) avec une longueur d'onde λ dans la gamme comprise entre 400 nm et 410 nm et avec une ouverture numérique (NA) dans la gamme comprise entre 0,84 et 0,86 qui entre, pendant la lecture, par le biais d'une face d'entrée (26) du support (20) comprenant:
- un substrat (21) sur lequel se situent d'un côté de celui-ci:
- une première pile de couches (L0, 22) comprenant une première couche d'information,
- une seconde pile de couches (L1, 23) comprenant une seconde couche d'information, ladite seconde pile de couches (L1, 23) étant présente dans une position qui se situe le plus proche de la face d'entrée (26) et ladite première pile de couches (L0, 22) étant présente dans une position qui est plus éloignée de la face d'entrée (26) que ladite seconde pile de couches (L1, 23),
- une couche d'espacement (24) transparente à un faisceau de rayonnement (29) entre ladite première pile de couches (L0, 22) et ladite seconde pile de couches (L1, 23),
- une couche de couverture (25) transparente à un faisceau de rayonnement (29) entre la face d'entrée (26) et ladite seconde pile de couches (L1, 23),
- une pile de transmission (TS0) avec une épaisseur d_{TS0} et un indice de réfraction efficace n_{TS0} contenant toutes les couches entre ladite première pile de couches (L0, 22) et la face d'entrée (26),
- une pile de transmission (TS 1) avec une épaisseur d_{TS1} et un indice de réfraction efficace n_{TS1} contenant toutes les couches entre ladite seconde pile de couches (L1, 23) et la face d'entrée (26),
**caractérisé en ce que**
la couche d'espacement (24) présente une épaisseur qui est sélectionnée parmi la gamme comprise entre 20 µm et 30 µm, **en ce que** l'épaisseur d_{TS0} en fonction de l'indice de réfraction n_{TS0} se situe dans la zone hachurée supérieure sur la figure 1 et **en ce que** l'épaisseur d_{TS1} en fonction de l'indice de réfraction n_{TS0} se situe dans la zone hachurée inférieure sur la figure 1.

2. Support de stockage de données optiques (20) selon la revendication 1, dans lequel les déviations maximales de d_{TS0} et de d_{TS1} en provenance des valeurs moyennes de d_{TS0} et de d_{TS1}, respectivement, entre un rayon égal à 23 mm ou à 24 mm du support (20) ne dépassent pas de ± 2 µm, ce qui est mesuré sur la surface entière du support (20).

3. Support de stockage de données optiques (20) selon la revendication 1 ou 2, dans lequel n_{TS0} et n_{TS1} présentent toutes les deux une valeur égale à 1,6 et les conditions suivantes sont remplies: 95 µm ≤ D_{TS0} ≤ 105 µm et 70 µm ≤ d_{TS1} ≤ 80 µm.

4. Support de stockage de données optiques (20) selon l'une quelconque des revendications précédentes 1 à 3, dans lequel l'épaisseur de la couche d'espacement (24) est égale à 25 µm ou se situe sensiblement proche de 25 µm et l'épaisseur de la couche de couverture (25) est égale à 75 µm ou se situe sensiblement proche de 75 µm.

5. Utilisation d'un support de stockage de données optiques selon l'une quelconque des revendications précédentes 1 à 4.
